# EUROPÄISCHE PATENTSCHRIFT

(11) **EP 3 729 540 B1**
(45) Veröffentlichungstag und Bekanntmachung des Hinweises auf die Patenterteilung: **29.09.2021**
(21) Anmeldenummer: 19701978.9
(22) Anmeldetag: 08.01.2019
(51) Int. Cl.: H01M 50/249, H01M 10/625, H01M 10/6557, H01M 10/613

(54) **ENERGIESPEICHERANORDNUNG**
ENERGY STORAGE ARRANGEMENT
ENSEMBLE ACCUMULATEUR D'ÉNERGIE

(30) Priorität: 31.01.2018 DE 102018201486
(43) Veröffentlichungstag der Anmeldung: 28.10.2020
(73) Patentinhaber: Siemens Mobility GmbH, 81739 München (DE)
(72) Erfinder: SCHENKEL, Mathias Wesley, 90475 Nürnberg (DE); TEICHMANN, Stefan, 91475 Lonnerstadt (DE)
(86) Internationale Anmeldenummer: PCT/EP2019/050307
(87) Internationale Veröffentlichungsnummer: WO 2019/149478

(56) Entgegenhaltungen:
- DE-A1-102014 216 811
- US-A1- 2008 299 446
- US-A1- 2016 036 102

## Beschreibung

Die Erfindung betrifft eine Energiespeicheranordnung, die beispielsweise auf einem Fahrzeug mit Elektroantrieb montierbar ist, wobei der Energiespeicher die Energie zum Betreiben eines oder mehrerer Elektromotoren des Fahrzeugs bereitstellt. Ferner betrifft die Erfindung einen Container für eine solche Energiespeicheranordnung sowie ein Fahrzeug mit einer solchen Energiespeicheranordnung oder einen solchen Container.

Elektrofahrzeuge, die ausschließlich mit einem Elektromotor betrieben werden oder so genannte Hybridfahrzeuge, die zusätzlich zu einem Verbrennungsmotor auch noch einen oder mehrere Elektromotoren aufweisen, benötigen zur Bereitstellung der elektrischen Energie zum Betreiben des Elektromotors bzw. Traktionsmotors einen vergleichsweise großen Bauraum in dem Fahrzeug für die Unterbringung einer Batterie. Eine solche auch als Traktionsbatterie bezeichnete Batterie umfasst üblicherweise mehrere Batteriemodule bzw. Batteriestränge mit jeweils einer Mehrzahl Batteriezellen, die untereinander verschaltet werden. Für spurgebundene Fahrzeuge wie beispielsweise Triebzüge, welche auf elektrifizierten Strecken verkehren und über beispielsweise eine Oberleitung mit elektrischer Energie versorgt werden, wird für einen Einsatz auf nicht elektrifizierten Strecken bzw. Streckenabschnitten ebenfalls eine Energieversorgung mittels einer oder mehrerer Traktionsbatterien angedacht. Ein solcher Triebzug wird nachfolgend als Batteriehybridzug bezeichnet.

Die Batteriemodule bzw. Batteriestränge können beispielsweise in einem Container angeordnet werden, der in oder an dem Elektrofahrzeug montiert ist. Bei einem Batteriehybridzug kann ein derartiger Container beispielsweise an einem Wagenkasten, insbesondere auf dem Dach oder im Unterflurbereich des Wagenkastens, angeordnet werden, wobei insbesondere Anforderungen bezüglich des Gesamtgewichts und der Abmaße des Containers zu beachten sind.

Um eine Überhitzung der Traktionsbatterie aufgrund einer beim Laden oder Entladen entstehenden hohen Verlustleistung zu verhindern, und damit die Lebensdauer der Batterie zu erhöhen, ist es erforderlich, die Batteriezellen der Batteriemodule in dem Container mittels einer Kühlvorrichtung zu kühlen.

Aus dem Dokument DE 10 2014 216 811 A1 ist ein Batteriemodulsystem bekannt, welches ein Gehäuse zur Aufnahme von mindestens zwei Batteriemodulen umfasst, wobei die Batteriemodule jeweils eine Kühlplatte umfassen, welche mittels mindestens eines Kühlmittelanschlusses mit einer Kühlflüssigkeit versorgt wird.

Aufgabe der vorliegenden Erfindung ist es, eine Energiespeicheranordnung anzugeben, die eine hohe Leistung bereitstellen kann und dennoch ein verhältnismäßig geringes Gewicht und einen kleinen Bauraum aufweist.

Eine Ausführungsform einer Energiespeicheranordnung, die auf einem Elektrofahrzeug oder einem Hybridfahrzeug, insbesondere auf dem Wagenkasten eines Zuges/Batteriehybridzuges, montierbar ist, um die zum Betreiben des Elektromotors notwendige Energie zur Verfügung zu stellen, und eine hohe Batteriekapazität hat, um eine hohe Leistung bereitstellen zu können, und einen kleinen Bauraum sowie ein verhältnismäßig geringes Gewicht aufweist, ist im Patentanspruch 1 angegeben.

Die Energiespeicheranordnung umfasst einen Stapel aus mehreren Batteriemodulen, die in dem Stapel übereinander angeordnet sind. Die Batteriemodule umfassen jeweils eine Vielzahl von Batteriezellen und Kühlplatten zum Kühlen der Batteriezellen. Die Energiespeicheranordnung umfasst darüber hinaus eine erste Seitenplatte und eine zweite Seitenplatte zum Tragen des Stapels aus den mehreren Batteriemodulen, wobei die Batteriemodule an der ersten und zweiten Seitenplatte befestigt sind. Weiterhin umfasst die Energiespeicheranordnung mindestens ein Kühlkreislaufsystem zur Kühlung der Batteriezellen mittels einer Kühlflüssigkeit. Das mindestens eine Kühlkreislaufsystem ist an einer der ersten und zweiten Seitenplatte angeordnet.

Bei dem vorliegenden Konzept einer Energiespeicheranordnung sind verschiedene Funktionalitäten platzsparend realisiert. Dazu weisen die Seitenplatten einerseits eine Tragfunktion zum Tragen der Batteriemodule/Batteriestränge auf. Zusätzlich weist mindestens eine der Seitenplatten eine Tragfunktion zum Tragen eines Kühlkreislaufsystems zur Kühlung der Batteriezellen der Batteriemodule auf. Es sind somit verschiedene Funktionalitäten in die Seitenplatten integriert.

Die Seitenplatten sind einerseits als Trägerplatten zum Tragen der einzelnen Batteriestränge/Batteriemodule ausgebildet, wobei eine Traktionsbatterie mit einem Gesamtgewicht von beispielsweise 800 kg von den Seitenplatten gehalten werden kann. Durch das auf mindestens einer der Seitenplatten montierte Kühlkreislaufsystem ist mindestens eine der Seitenplatten zusätzlich als eine Kühlmittelverteilerplatte ausgebildet. Durch die einfache Montage eines Kühlkreislaufsystems aus Rohren und Einschraubwinkeln, Schnellkupplungen oder Schlauchtüllen als Verbindungselemente zwischen den Rohren ermöglicht die mindestens eine der Seitenplatten in ihrer Funktion als Kühlmittelverteilerplatte die Montage eines schnell austauschbare Kühlkreislaufsystems zur Kühlmittelverteilung.

Des Weiteren ermöglicht die Energiespeicheranordnung eine aktive Containerkühlung durch eine Oberflächenkühlung. Die Energiespeicheranordnung weist zusätzlich eine schlanke Bauweise auf und ermöglicht somit die Realisierung einer kurzen Containerlänge unter Einhaltung von Gewichtsanforderungen, wie sie beispielsweise für die Montage einer Traktionsbatterie auf einem Fahrzeug, insbesondere einem Zug/Batteriehybridzug, gelten.

Die Erfindung wird im Folgenden anhand von Figuren, die Ausführungsbeispiele der Energiespeicheranordnung zeigen, näher erläutert.

Es zeigen:
Figur 1 eine Ausführungsform einer Energiespeicheranordnung mit einem Stapel aus mehreren Batteriemodulen in einem Container,
Figur 2 eine Ausführungsform einer Energiespeicheranordnung mit einem Stapel aus mehreren Batteriemodulen in einem Container mit einer Bodenplatte zur Realisierung eines Schubfeldes,
Figur 3 eine vergrößerte Ansicht einer Befestigungsplatte zur Montage der Energiespeicheranordnung auf einem Fahrzeug,
Figur 4 eine Ausführungsform einer Seitenplatte einer Energiespeicheranordnung, die als eine adaptive Kühlmittelverteilerplatte mit einem Kühlkreislaufsystem ausgebildet ist,
Figur 5 einen vergrößerten Ausschnitt eines Kühlmittelkreislaufsystems auf einer als adaptive Kühlmittelverteilerplatte ausgebildeten Seitenplatte einer Energiespeicheranordnung,
Figur 6 eine als adaptive Kühlmittelverteilerplatte ausgebildete Seitenplatte einer Energiespeicheranordnung mit einem Kühlkreislaufsystem mit geringer Bauhöhe.

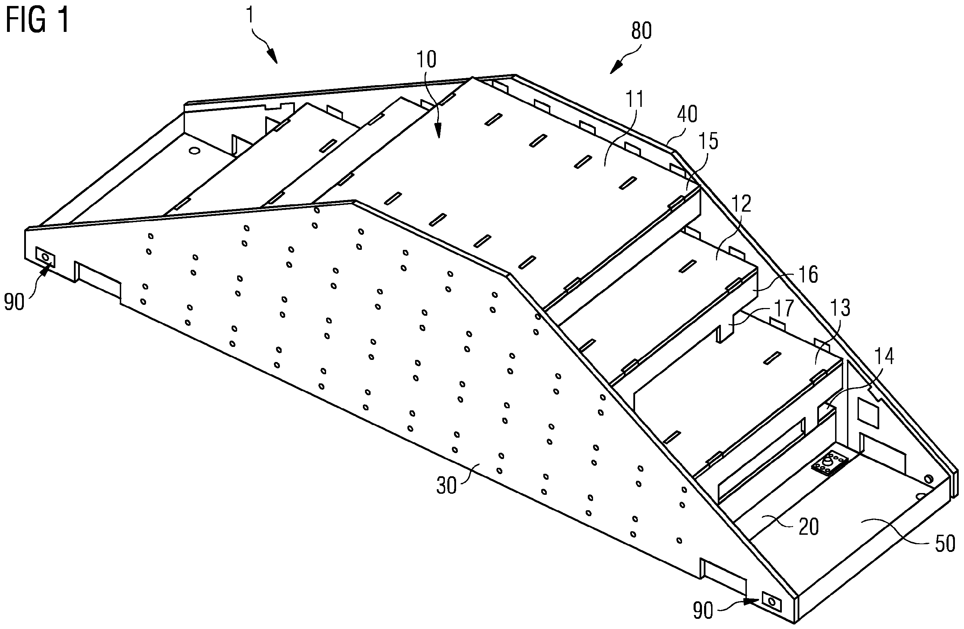

Figur 1 zeigt eine beispielhafte Ausführungsform einer Energiespeicheranordnung 1 mit einer Batterie, die aus einem Stapel 10 aus mehreren Batteriemodulen/Batteriesträngen 11, 12, 13 und 14 gebildet wird. Die Batteriemodule sind in dem Stapel 10 übereinander angeordnet. Die Batteriemodule sind durch Distanzelemente 17 beabstandet zueinander angeordnet. Jedes Batteriemodul 11, 12, 13, 14 bildet eine Batterieebene beziehungsweise einen Batteriestrang der Gesamtbatterie. Die einzelnen Batteriemodule sind untereinander derart verschaltet, dass eine Traktionsbatterie aus mehreren Batteriesträngen/Batterieebenen gebildet wird. Im dargestellten Ausführungsbespiel umfasst die Traktionsbatterie die vier Batteriestränge beziehungsweise Batteriemodule 11, 12, 13 und 14.

Jedes Batteriemodul 11, 12, 13 und 14 weist eine Vielzahl von Batteriezellen 15 auf, welche in den Figuren nicht näher dargestellt sind. Beim Laden und Entladen der Batteriezellen 15 erwärmen sich die Zellen. Um eine Überhitzung zu vermeiden, ist zumindest eine Kühlplatte 16 zum Kühlen der Batteriezellen 15 in jedem der Batteriemodule angeordnet.

Die Energiespeicheranordnung 1 umfasst eine erste Seitenplatte 30 und eine zweite Seitenplatte 40 zum Tragen des Stapels 10 aus den mehreren Batteriemodulen 11, 12, 13 und 14. Die Batteriemodule 11, 12, 13 und 14 sind jeweils an der ersten Seitenplatte 30 und der zweiten Seitenplatte 40 befestigt. Die erste Seitenplatte 30 und die zweite Seitenplatte 40 sind somit an gegenüberliegenden Seiten des Stapels 10 aus den mehreren Batteriemodulen 11, 12, 13 und 14 angeordnet. Die Batteriemodule/Batteriestränge können beispielsweise an die erste Seitenplatte 30 und die zweite Seitenplatte 40 angeschraubt sein. Bei der Energiespeicheranordnung 1 übernehmen die Seitenplatten 30 und 40 somit eine Tragfunktion für jedes Batteriemodul beziehungsweise jeden Traktionsbatteriestrang 11, 12, 13, 14. Die erste und die zweite Seitenplatte 30, 40 sind daher als Tragplatten zum Tragen der Batteriemodule/Batteriestränge 11, 12, 13 und 14 ausgebildet.

Wie anhand von Figur 1 deutlich wird, sind die Batteriestränge/Batteriemodule 11, 12, 13 und 14 zwischen der ersten und der zweiten Seitenplatte 30 und 40 pyramidenförmig gestapelt. Die Seitenplatten 30, 40 weisen insbesondere zur Einhaltung eines vorgegebenen Lichtraumprofils ein abgeflachtes dreieckförmiges Profil auf. Durch eine derartige Ausgestaltung weist die Energiespeicheranordnung 1 bei geringem Bauraum eine hohe Batteriekapazität auf, so dass eine hohe Leistung zur Verfügung gestellt werden kann.

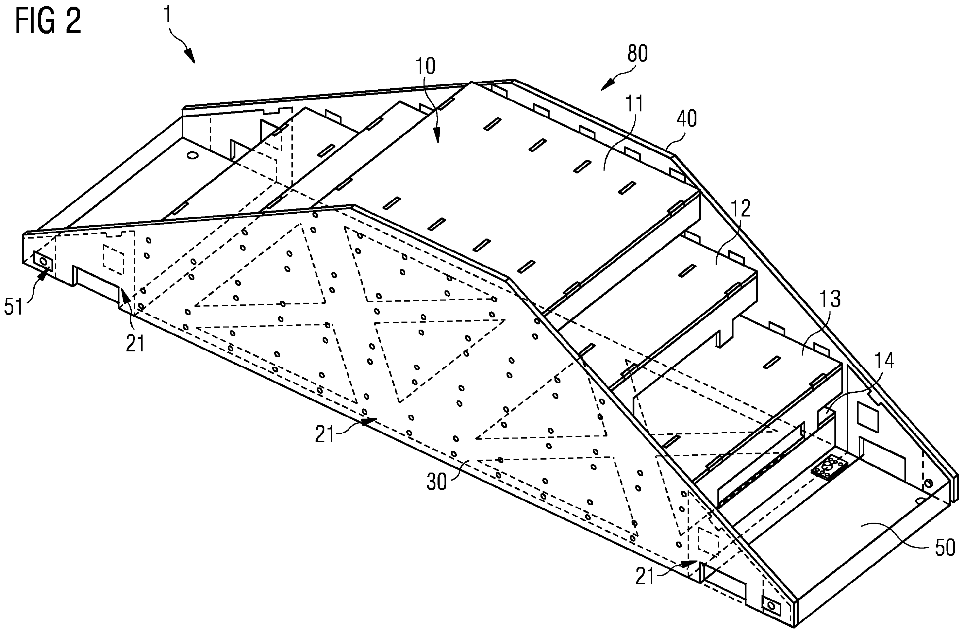

Die Energiespeicheranordnung 1 umfasst des Weiteren eine Bodenplatte 20, auf der der Stapel 10 aus den mehreren Batteriemodulen 11, 12, 13 und 14 angeordnet ist. Die Seitenplatten 30 und 40 als auch die Bodenplatte 20 bilden eine Tragstruktur zum Tragen der Batteriemodule. Wie in Figur 2 zu erkennen ist, kann die Bodenplatte 20 eine Fachwerkstruktur aufweisen. Dadurch wird ein Schubfeld 21 realisiert, das Kräfte in der dargestellten X- und Y-Richtung in einen Wagenkasten eines Fahrzeugs, insbesondere eines Hybrid- oder Elektrofahrzeugs übertragen kann, auf dem die Energiespeicheranordnung 1 angeordnet wird.

Die Energiespeicheranordnung 1 umfasst des Weiteren eine Befestigungsplatte 50 zum Befestigen der Energiespeicheranordnung auf einem Untergrund, beispielsweise auf einem Hybrid- oder Elektrofahrzeugs, und insbesondere auf einem Wagenkasten eines Zuges/Hybridbatteriezuges. Wie in den Figuren 1 und 2 dargestellt ist, ist die Befestigungsplatte 50 an beiden Seiten der Batteriemodule/Batteriestränge 11, 12, 13 und 14 angeordnet. Die Bodenplatte 20, die beiden Seitenplatten 30 und 40 und die Befestigungsplatte 50 bilden eine Tragstruktur in Form eines Container 80 zur Aufnahme der Batteriemodule.

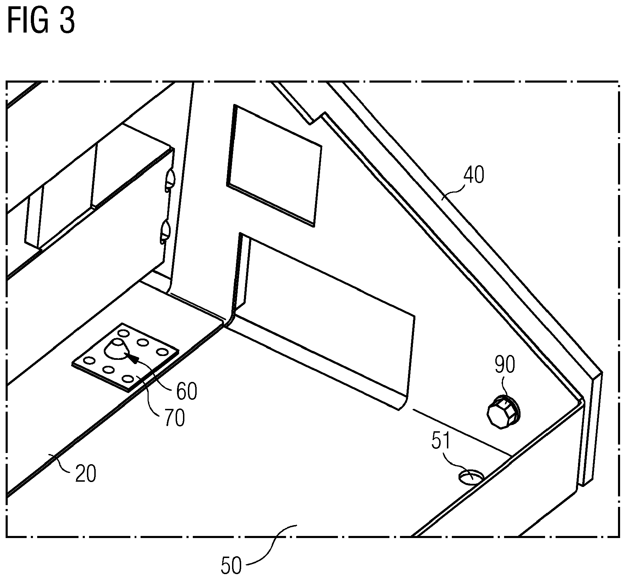

Wie in Figur 3 dargestellt ist, sind die erste und die zweite Seitenplatte 30 und 40 über Befestigungsmittel 90 mit der Befestigungsplatte 50 verbunden. Im dargestellten Ausführungsbeispiel erfolgt die Anbindung der Seitenplatten 30 und 40 an die Befestigungsplatte 50 an vier Stellen über die Befestigungsmittel 90. Die Befestigungsmittel 90 können beispielsweise Schrauben sein, durch die die erste und zweite Seitenplatte 30 und 40 an der Befestigungsplatte 50 fixiert sind. Durch die Anbindung der Seitenplatten 30 und 40 an die Befestigungsplatte 50 kann eine Anbindung der ersten und zweite Seitenplatte an ein Objekt, beispielsweise einen Wagenkasten eines Zuges, auf dem die Befestigungsplatte montiert ist, erfolgen. Insbesondere erfolgt somit eine direkte Krafteinleitung der Gewichtskräfte der Batteriemodule/Batteriestränge über die Seitenplatten 30 und 40 in den Wagenkasten.

Die Bodenplatte 20 ist über ein Blechteil 70 mit der Befestigungsplatte 50 verbunden. Zur Übertragung von Kräften in der X- und Y-Richtung können Scherbolzen 60 vorgesehen sein. Die Befestigungsplatte 50 weist darüber hinaus Bohrungen 51 zur Aufnahme von Befestigungsmitteln, beispielsweise von Schrauben, zum Befestigen der Befestigungsplatte 50 und somit der gesamten Energiespeicheranordnung 1 auf dem Wagenkasten eines Hybrid- oder Elektrofahrzeugs auf. Darüber hinaus können Dehnhülsen und gegebenenfalls Scherbolzen für die Krafteinleitung in den Wagenkasten vorgesehen sein.

Das Gewicht der Batteriemodule beziehungsweise Batteriestränge 11, 12, 13 und 14 wird von den Seitenplatten 30 und 40 direkt auf die Befestigungsplatte 50 und von der Befestigungsplatte 50 direkt in den Wagenkasten eines Elektro- oder Hybridfahrzeugs, beispielsweise eines Zuges/Batteriehybridzuges, eingeleitet. Daraus resultiert eine hohe Platzersparnis.

Die Energiespeicheranordnung 1 umfasst mindestens ein Kühlkreislaufsystem 100 zur Kühlung der Batteriestränge/Batteriemodule 11, 12, 13 und 14 mittels einer Kühlflüssigkeit. Mindestens eine der ersten und der zweiten Seitenplatte 30, 40 ist derart ausgebildet, dass das mindestens eine Kühlkreislaufsystem 100 auf der einen der ersten und zweiten Seitenplatte 30 und 40 befestigt werden kann. Das mindestens eine Kühlkreislaufsystem kann auf der Seitenplatte 30 und/oder der Seitenplatte 40 angeordnet sein.

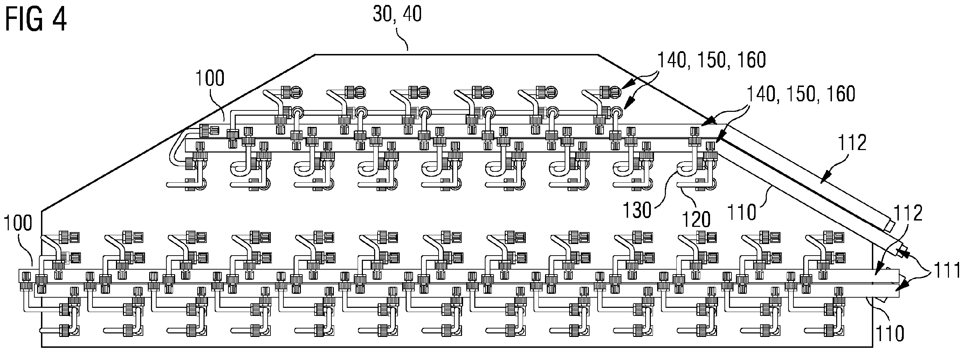

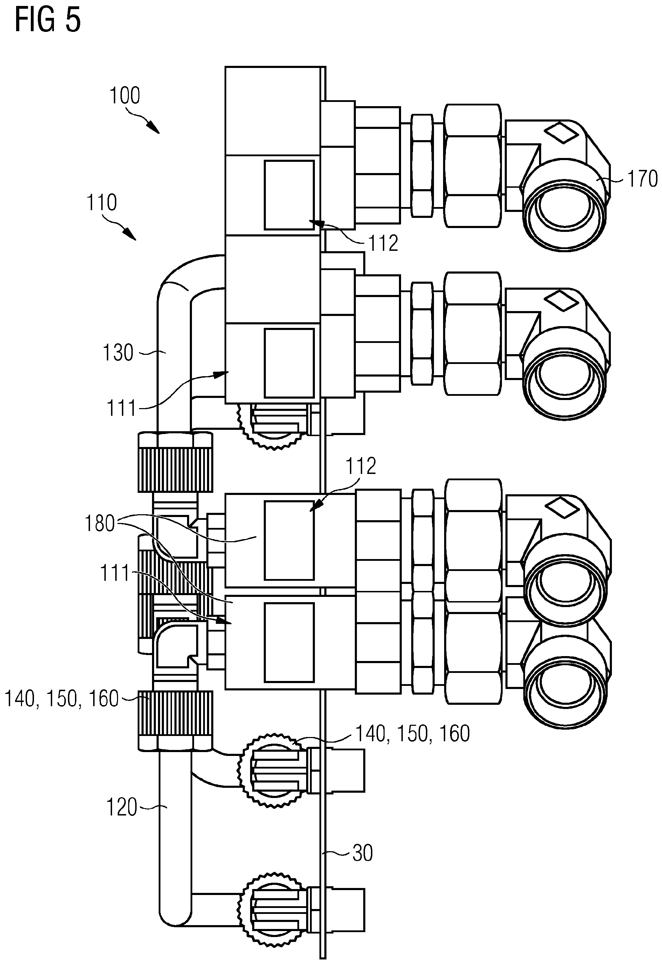

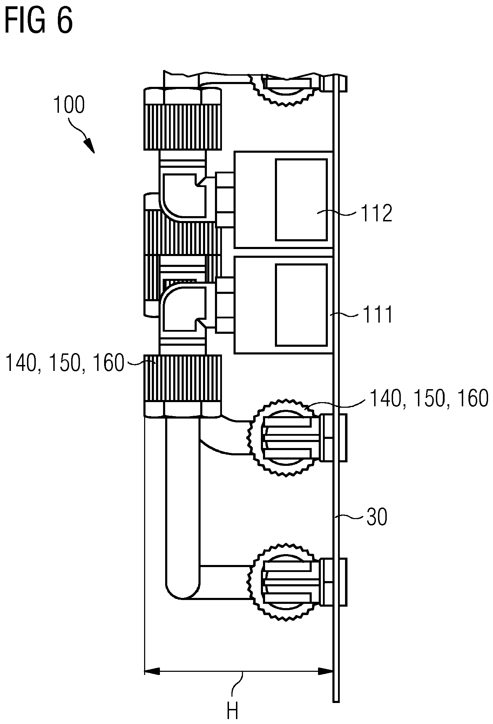

Figur 4 zeigt eine Draufsicht auf die Seitenplatte 30 mit dem darauf befestigten mindestens einen Kühlkreislaufsystem 100. Bei dem Ausführungsbeispiel der Figur 4 sind zwei Kühlkreislaufsysteme 100 auf der Seitenplatte 30 befestigt. Die Figuren 5 und 6 zeigen jeweils Queransichten der Seitenplatte 30 mit dem darauf befestigten mindestens einen Kühlkreislaufsystem 100.

Das mindestens eine Kühlkreislaufsystem 100 umfasst einen Kühlverteiler 110 zum Verteilen der Kühlflüssigkeit auf die mehreren Batteriemodule/Batteriestränge 11, 12, 13 und 14. Der Kühlverteiler 110 ist auf der Seitenplatte 30 angeordnet. Er umfasst ein Vorlaufrohr 111 und ein Rücklaufrohr 112 zum Transport der Kühlflüssigkeit von einem Klimagerät zu den Kühlplatten beziehungsweise zum Abtransport der Kühlflüssigkeit von den Kühlplatten zu dem Klimagerät. Das Vorlaufrohr 111 und das Rücklaufrohr 112 sind auf einer der ersten und der zweiten Seitenplatte angeordnet. Im dargestellten Ausführungsbeispiel ist der Kühlverteiler 100 mit dem Vorlaufrohr 111 und dem Rücklaufrohr 112 auf der Seitenplatte 30 angeordnet. Beispielhaft sind zwei Kühlverteiler 110 mit ihren jeweiligen Vorlauf- und Rücklaufrohren auf der Seitenplatte 30 angeordnet.

Der Kühlverteiler 110 kann mittels der in den Figuren 5 und 6 dargestellten Einschraubverschraubungen 170 an das Klimagerät angeschlossen werden. Statt den dargestellten vier Einschraubverschraubungen 170 für die beiden Kühlkreislaufsysteme können nur zwei Einschraubverschraubungen verwendet werden, wenn die Kühlverteiler 100 der beiden Kühlkreislaufsysteme verbunden werden. Statt den Einschraubverschraubungen können Schnellkupplungen verwendet werden.

Das mindestens eine Kühlkreislaufsystem 100 weist mehrere Vorlaufleitungen 120 zum Transport der Kühlflüssigkeit von dem Vorlaufrohr 111 zu jeweils einer der Kühlplatten 16 auf. Des Weiteren weist das mindestens eine Kühlkreislaufsystem 100 mehrere Rücklaufleitungen 130 zum Abtransport der Kühlflüssigkeit von den Kühlplatten 16 zu dem Rücklaufrohr 112 auf.

Die Vorlaufleitungen 120 sind jeweils mittels eines Einschraubwinkels 140 an das Vorlaufrohr 111 angeschlossen. Ebenso ist die Rücklaufleitung 130 jeweils mittels eines Einschraubwinkels 140 an das Rücklaufrohr 112 angeschlossen. Anstelle eines Einschraubwinkels können die Vorlaufleitungen 120 beziehungsweise die Rücklaufleitungen 130 jeweils mittels einer Schnellkupplung 150 oder einer Schlauchtülle 160 an das Vorlaufrohr 111 beziehungsweise an das Rücklaufrohr 112 angeschlossen sein.

Gemäß einer möglichen Ausführungsform können statt den Winkelverschraubungen auf dem Profil des Vorlauf- beziehungsweise Rücklaufrohres gerade Verschraubungen oder alternativ dazu gerade Rohre oder Schlauchtüllen seitlich am Profil angeordnet sein. Gemäß einer anderen Ausführungsform können anstelle von Winkelverschraubungen gebogene Rohre oder Schlauchtüllen oben am Profil des Vorlauf- beziehungsweise Rücklaufrohres angeordnet sein.

Bei der in den Figuren 4, 5 und 6 gezeigten Ausführungsform der Energiespeicheranordnung 1 sind die Einschraubwinkel 140 in Bohrungen 180 des Vorlaufrohrs 111 und des Rücklaufrohrs 112 eingeschraubt. Anstelle der Bohrungen für die Verschraubungen können alternativ kleine Rohre als Zwischenstücke zwischen dem Vorlauf-/Rücklaufrohr und einer der Vorlauf-/Rücklaufleitungen in das Vorlauf- beziehungsweise Rücklaufrohr eingelötet, verschweißt oder verklebt werden. Wie bereits oben erwähnt, können derartige Rohre nicht nur auf dem Profil des Vorlauf- beziehungsweise Rücklaufrohres angeordnet sein, sondern auch seitlich im Profil des Vorlauf- beziehungsweise Rücklaufrohres vorgesehen sein. Dadurch ergibt sich insbesondere eine hohe Platzersparnis.

Die Vorlaufleitungen 120 können ebenfalls jeweils mittels eines Einschraubwinkels 140 an eine der Kühlplatten 16 angeschlossen sein. Ebenso können die Rücklaufleitungen 130 jeweils mittels eines Einschraubwinkels 140 an eine der Kühlplatten 16 angeschlossen sein. Alternativ zur Verwendung eines Einschraubwinkels kann die Verbindung zwischen den Vorlauf- beziehungsweise Rücklaufleitungen 120, 130 und einer der Kühlplatten 16 jeweils mittels einer Schnellkupplung 150 oder einer Schlauchtülle 160 erfolgen. Die Vorlauf- und Rücklaufleitungen sind so miteinander verbunden, dass das Kühlkreislaufsystem 100 einen hydraulischen Abgleich aufweist.

Die Vorlaufleitungen 120 als auch die Rücklaufleitungen 130 können jeweils als ein Edelstahlrohr oder als ein Aluminiumrohr oder beispielsweise als ein Kunststoffschlauch ausgebildet sein.

Wie anhand der Figuren 5 und 6 zu erkennen ist, kann das Vorlaufrohr 111 und das Rücklaufrohr 112 jedes Kühlkreislaufsystemsystems 100 jeweils als ein Rohr mit einem rechteckigen Querschnitt ausgebildet sein. Alternativ dazu können das Vorlaufrohr 111 und das Rücklaufrohr 112 jedes Kühlkreislaufsystems 100 jeweils einen quadratischen oder runden Querschnitt aufweisen. Das Vorlaufrohr 111 und das Rücklaufrohr 112 jedes Kühlkreislaufsystems 100 können beispielsweise als ein Aluminiumrohr oder als ein Kunststoffrohr ausgebildet sein.

Gemäß einer weiteren Ausführungsform kann das Vorlaufrohr 111 und das Rücklaufrohr 112 jedes Kühlkreislaufsystems 100 jeweils als ein Einkammer-Rohrprofil ausgebildet sein. Gemäß einer Weiterbildung kann das Vorlaufrohr 111 und das Rücklaufrohr 112 jedes Kühlkreislaufsystems 100 jeweils als ein Mehrkammer-Rohrprofil ausgebildet sein.

Neben ihrer Funktion als Tragplatten übernimmt mindestens eine der Seitenplatten 30, 40 zusätzlich die Funktion ein Kühlkreislaufsystem zur Kühlmittelverteilung zu tragen. Die mindestens eine Seitenplatte ist daher als eine adaptive Kühlmittelverteilerplatte ausgebildet. Die Seitenplatten 30 und 40 werden adaptiv auf die Befestigungsplatte 50 montiert. Die Kühlrohre, das heißt die Vorlauf-/Rücklaufleitungen 120, 130, müssen nur noch mit den dahinterliegenden Kühlplatten 16 verbunden werden. Dazu können beispielsweise die oben beschriebenen Einschraubwinkel, Schnellkupplungen oder Schlauchtüllen verwendet werden. Das Kühlmittelverteilersystem ist dadurch schnell austauschbar. Wie anhand von Figur 6 erkennbar ist, weist das Kühlmittelverteilersystem eine geringe Bauhöhe H auf der Seitenplatte auf, so dass die gesamte Anordnung einen geringen Bauraum aufweist. Im Wartungs- und Montagefall sind die adaptiven Seitenplatten 30 und 40 ebenfalls schnell austauschbar. Weitere Vorzüge sind die einfache Fertigung als auch das geringe Eigengewicht der Energiespeicheranordnung.

### Bezugszeichenliste

- 1: Energiespeicheranordnung
- 10: Stapel aus Batteriemodulen
- 11, 12, 13, 14: Batteriestränge, Batteriemodule
- 15: Batteriezellen
- 16: Kühlplatten
- 17: Distanzelement
- 20: Bodenplatte
- 21: Schubfeld
- 30: Seitenplatte
- 40: Seitenplatte
- 50: Befestigungsplatte
- 51: Bohrung in der Befestigungsplatte
- 60: Scherbolzen
- 70: Stahlblech
- 80: Container
- 90: Befestigungsmittel
- 100: Kühlkreislaufsystemsystem
- 110: Kühlverteiler
- 111: Vorlaufrohr
- 112: Rücklaufrohr
- 120: Vorlaufleitung
- 130: Rücklaufleitung
- 140: Einschraubwinkel
- 150: Schnellkupplung
- 160: Schlauchtülle

## Patentansprüche

1. Energiespeicheranordnung, umfassend:
- einen Stapel (10) aus mehreren Batteriemodulen (11, 12, 13, 14), die in dem Stapel (10) übereinander angeordnet sind, wobei die Batteriemodule (11, 12, 13, 14) jeweils eine Vielzahl von Batteriezellen (15) und zumindest eine Kühlplatte (16) zum Kühlen der Batteriezellen (15) umfassen,
- eine erste Seitenplatte (30) und eine zweite Seitenplatte (40) zum Tragen des Stapels (10) aus den mehreren Batteriemodulen (11, 12, 13, 14), wobei die Batteriemodule (11, 12, 13, 14) an der ersten und zweiten Seitenplatte (30, 40) befestigt sind,
- mindestens ein Kühlkreislaufsystem (100) zur Kühlung der Batteriezellen (15) mittels einer Kühlflüssigkeit,
**dadurch gekennzeichnet, dass**
- das mindestens eine Kühlkreislaufsystem (100) an einer der ersten und zweiten Seitenplatte (30, 40) angeordnet ist,
- das mindestens eine Kühlkreislaufsystem (100) einen Kühlverteiler (110) zum Verteilen der Kühlflüssigkeit auf die mehreren Batteriemodule (11, 12, 13, 14) umfasst und der Kühlverteiler (110) zumindest ein Vorlaufrohr (111) und ein Rücklaufrohr (112) umfasst, wobei das Vorlaufrohr (111) und das Rücklaufrohr (112) an der einen der ersten und der zweiten Seitenplatte (30, 40) angeordnet sind,
- das mindestens eine Kühlkreislaufsystem (100) mehrere Vorlaufleitungen (120) zum Transport der Kühlflüssigkeit von dem Vorlaufrohr (111) zu jeweils einer der Kühlplatten (16) und mehrere Rücklaufleitungen (130) zum Abtransport der Kühlflüssigkeit von den Kühlplatten (16) zu dem Rücklaufrohr (112) aufweist, und
- die Vorlaufleitungen (120) jeweils mittels eines Einschraubwinkels (140) an das Vorlaufrohr (111) angeschlossen sind und die Rücklaufleitungen (130) jeweils mittels eines Einschraubwinkels (140) an das Rücklaufrohr (112) angeschlossen sind, wobei die Einschraubwinkel (140) jeweils in eine Bohrung (180) des Vorlaufrohrs (111) und des Rücklaufrohrs (112) eingeschraubt sind.

2. Energiespeicheranordnung nach Anspruch 1, wobei
- die Vorlaufleitungen (120) jeweils mittels eines Einschraubwinkels (140) oder einer Schnellkupplung (150) oder einer Schlauchtülle (160) an eine der Kühlplatten (16) angeschlossen sind, und
- die Rücklaufleitungen (130) jeweils mittels eines Einschraubwinkels (140) oder einer Schnellkupplung (150) oder einer Schlauchtülle (160) an eine der Kühlplatten (16) angeschlossen sind.

3. Energiespeicheranordnung nach Anspruch 1 oder 2, wobei die Vorlaufleitungen (120) und die Rücklaufleitungen (130) jeweils als ein Edelstahlrohr oder als ein Aluminiumrohr oder als ein Kunststoffschlauch ausgebildet sind.

4. Energiespeicheranordnung nach einem der Ansprüche 1 bis 3, wobei
das Vorlaufrohr (111) und das Rücklaufrohr (112) jeweils als ein Rohr mit einem quadratischen oder einem rechteckigen oder einem runden Querschnitt ausgebildet sind.

5. Energiespeicheranordnung nach einem der Ansprüche 1 bis 4, wobei
das Vorlaufrohr (111) und das Rücklaufrohr (112) jeweils als ein Aluminiumrohr oder als ein Kunststoffrohr ausgebildet sind.

6. Energiespeicheranordnung nach einem der Ansprüche 1 bis 5, wobei
das Vorlaufrohr (111) und das Rücklaufrohr (112) jeweils als ein Einkammer-Rohrprofil oder als ein Mehrkammer-Rohrprofil ausgebildet sind.

7. Energiespeicheranordnung nach einem der Ansprüche 1 bis 6, wobei
die erste und die zweite Seitenplatte (30, 40) an gegenüberliegenden Seiten des Stapels (10) aus den mehreren Batteriemodulen (11, 12, 13, 14) angeordnet sind.

8. Energiespeicheranordnung nach einem der Ansprüche 1 bis 7, wobei
die mehreren Batteriemodule (11, 12, 13, 14) zwischen der ersten und der zweiten Seitenplatte (30, 40) pyramidenförmig gestapelt sind.

9. Energiespeicheranordnung nach einem der Ansprüche 1 bis 8, ferner umfassend:
eine Bodenplatte (20), auf der der Stapel (10) aus den mehreren Batteriemodulen (11, 12, 13, 14) angeordnet ist, wobei die Bodenplatte (20) eine Fachwerkstruktur aufweist.

10. Energiespeicheranordnung nach einem der Ansprüche 1 bis 9, ferner umfassend:
eine Befestigungsplatte (50) zum Befestigen der Energiespeicheranordnung (1) mittels eines Scherbolzens (60) auf einem Objekt.

11. Energiespeicheranordnung nach einem der Ansprüche 1 bis 10, wobei
die Batteriemodule (11, 12, 13, 14) untereinander als eine Traktionsbatterie verschaltet sind.

12. Container (300) zur Aufnahme von Batteriemodulen (11, 12, 13, 14), umfassend:
- eine Bodenplatte (20), auf der ein Stapel (10) aus einer Mehrzahl Batteriemodulen (11, 12, 13, 14) anordenbar ist, sowie erste und eine zweite, jeweils senkrecht zu der Bodenplatte (20) und seitlich des Stapels (10) angeordnete Seitenplatten (30, 40) zum Tragen und Befestigen der Batteriemodule (11, 12, 13, 14), und
- mindestens ein Kühlkreislaufsystem (100) zur Kühlung von Batteriezellen (15) der Batteriemodule (11, 12, 13, 14) mittels einer Kühlflüssigkeit, wobei das mindestens eine Kühlkreislaufsystem (100) an einer der ersten und zweiten Seitenplatte (30, 40) angeordnet ist,
- wobei das mindestens eine Kühlkreislaufsystem (100) einen Kühlverteiler (110) zum Verteilen der Kühlflüssigkeit auf die mehreren Batteriemodule (11, 12, 13, 14) umfasst und der Kühlverteiler (110) zumindest ein Vorlaufrohr (111) und ein Rücklaufrohr (112) umfasst, wobei das Vorlaufrohr (111) und das Rücklaufrohr (112) an der einen der ersten und der zweiten Seitenplatte (30, 40) angeordnet sind,
- wobei das mindestens eine Kühlkreislaufsystem (100) mehrere Vorlaufleitungen (120) zum Transport der Kühlflüssigkeit von dem Vorlaufrohr (111) zu jeweils einer der Kühlplatten (16) und mehrere Rücklaufleitungen (130) zum Abtransport der Kühlflüssigkeit von den Kühlplatten (16) zu dem Rücklaufrohr (112) aufweist, und
- wobei die Vorlaufleitungen (120) jeweils mittels eines Einschraubwinkels (140) an das Vorlaufrohr (111) angeschlossen sind und die Rücklaufleitungen (130) jeweils mittels eines Einschraubwinkels (140) an das Rücklaufrohr (112) angeschlossen sind, wobei die Einschraubwinkel (140) jeweils in eine Bohrung (180) des Vorlaufrohrs (111) und des Rücklaufrohrs (112) eingeschraubt sind.

13. Fahrzeug, aufweisend zumindest eine Energiespeicheranordnung nach einem der Ansprüche 1 bis 11.

14. Fahrzeug nach Anspruch 13, ausgestaltet als ein spurgebundenes Fahrzeug.

## Claims

1. Energy storage arrangement, comprising:
- a stack (10) of multiple battery modules (11, 12, 13, 14), which are arranged one above the other in the stack (10), wherein the battery modules (11, 12, 13, 14) each comprise a large number of battery cells (15) and at least one cooling plate (16) for cooling the battery cells (15),
- a first side plate (30) and a second side plate (40) for carrying the stack (10) of the multiple battery modules (11, 12, 13, 14), wherein the battery modules (11, 12, 13, 14) are fastened to the first and second side plate (30, 40),
- at least one cooling circuit system (100) for cooling the battery cells (15) by means of a coolant,
**characterised in that**
- the at least one cooling circuit system (100) is arranged on one of the first and second side plates (30, 40),
- the at least one cooling circuit system (100) comprises a cooling distributor (110) for distributing the coolant to the multiple battery modules (11, 12, 13, 14) and the cooling distributor (110) comprises at least one forward pipe (111) and one return pipe (112), wherein the forward pipe (111) and the return pipe (112) are arranged on the one of the first and the second side plate (30, 40),
- the at least one cooling circuit system (100) has multiple forward lines (120) for transporting the coolant from the forward pipe (111) to one of the cooling plates (16) in each case and multiple return lines (130) for transporting the coolant away from the cooling plates (16) to the return pipe (112), and
- the forward lines (120) are in each case connected to the forward pipe (111) by means of a screw-in bracket (140) and the return lines (130) are in each case connected to the return pipe (112) by means of a screw-in bracket (140), wherein the screw-in brackets (140) are in each case screwed into a bore (180) of the forward pipe (111) and of the return pipe (112).

2. Energy storage arrangement according to claim 1, wherein
- the forward lines (120) are in each case connected to one of the cooling plates (16) by means of a screw-in bracket (140) or a quick-action coupling (150) or a hose barb (160), and
- the return lines (130) are in each case connected to one of the cooling plates (16) by means of a screw-in bracket (140) or a quick-action coupling (150) or a hose barb (160).

3. Energy storage arrangement according to claim 1 or 2, wherein
the forward lines (120) and the return lines (130) are in each case embodied as a stainless steel pipe or as an aluminium pipe or as a plastic hose.

4. Energy storage arrangement according to one of claims 1 to 3, wherein
the forward pipe (111) and the return pipe (112) are in each case embodied as a pipe with a square or a rectangular or a round cross-section.

5. Energy storage arrangement according to one of claims 1 to 4, wherein
the forward pipe (111) and the return pipe (112) are in each case embodied as an aluminium pipe or as a plastic hose.

6. Energy storage arrangement according to one of claims 1 to 5, wherein
the forward pipe (111) and the return pipe (112) are in each case embodied as a single-chamber pipe profile or as a multichamber pipe profile.

7. Energy storage arrangement according to one of claims 1 to 6, wherein
the first and the second side plate (30, 40) are arranged on opposite sides of the stack (10) of the multiple battery modules (11, 12, 13, 14).

8. Energy storage arrangement according to one of claims 1 to 7, wherein
the multiple battery modules (11, 12, 13, 14) are stacked in the shape of a pyramid between the first and the second side plate (30, 40).

9. Energy storage arrangement according to one of claims 1 to 8, further comprising:
a base plate (20), on which the stack (10) of the multiple battery modules (11, 12, 13, 14) is arranged, wherein the base plate (20) has a framework structure.

10. Energy storage arrangement according to one of claims 1 to 9, further comprising:
a fastening plate (50) for fastening the energy storage arrangement (1) to an object by means of a shear bolt (60).

11. Energy storage arrangement according to one of claims 1 to 10, wherein
the battery modules (11, 12, 13, 14) are interconnected to one another in the form of a traction battery.

12. Container (300) for accommodating battery modules (11, 12, 13, 14), comprising:
- a base plate (20), on which a stack (10) of a plurality of battery modules (11, 12, 13, 14) can be arranged, as well as a first and a second side plate (30, 40), in each case arranged perpendicularly to the base plate (20) and to the side of the stack (10), for supporting and fastening the battery modules (11, 12, 13, 14), and
- at least one cooling circuit system (100) for cooling battery cells (15) of the battery module (11, 12, 13, 14) by means of a coolant, wherein the at least one cooling circuit system (100) is arranged on one of the first and second side plate (30, 40),
- wherein the at least one cooling circuit system (100) comprises a cooling distributor (110) for distributing the coolant to the multiple battery modules (11, 12, 13, 14) and the cooling distributor (110) comprises at least one forward pipe (111) and one return pipe (112), wherein the forward pipe (111) and the return pipe (112) are arranged on the one of the first and the second side plate (30, 40),
- wherein the at least one cooling circuit system (100) has multiple forward lines (120) for transporting the coolant from the forward pipe (111) to one of the cooling plates (16) in each case and multiple return lines (130) for transporting the coolant away from the cooling plates (16) to the return pipe (112), and
- wherein the forward lines (120) are in each case connected to the forward pipe (111) by means of a screw-in bracket (140) and the return lines (130) are in each case connected to the return pipe (112) by means of a screw-in bracket (140), wherein the screw-in brackets (140) are in each case screwed into a bore (180) of the forward pipe (111) and of the return pipe (112).

13. Vehicle, having at least one energy storage arrangement according to one of claims 1 to 11.

14. Vehicle according to claim 13, embodied as a rail-bound vehicle.

## Revendications

1. Ensemble accumulateur d'énergie comprenant :
- une pile (10) de plusieurs modules (11, 12, 13, 14) de batterie, qui sont disposés en étant superposés dans la pile (10), les modules (11, 12, 13, 14) de batterie comprenant chacun une pluralité d'éléments (15) de batterie et au moins une plaque (16) de refroidissement pour refroidir les éléments (15) de batterie,
- une première plaque (30) latérale et une deuxième plaque (40) latérale pour porter la pile (10) des plusieurs modules (11, 12, 13, 14) de batterie, les modules (11, 12, 13, 14) de batterie étant fixés à la première plaque et à la deuxième plaque (30, 40) latérale,
- au moins un système (100) de circuit de refroidissement pour le refroidissement des éléments (15) de batterie au moyen d'un liquide de refroidissement,
**caractérisé en ce que**
- le au moins un système (100) de circuit de refroidissement est disposé sur l'une des première et deuxième plaques (30, 40) latérales,
- le au moins un système (100) de circuit de refroidissement comprend un répartiteur (110) de refroidissement pour la répartition du liquide de refroidissement sur les plusieurs modules (11, 12, 13, 14) de batterie et le répartiteur (110) de refroidissement comprend au moins un tuyau (111) d'admission et un tuyau (112) de retour, dans lequel le tuyau (111) d'admission et le tuyau (112) de retour sont disposés sur la une des première et deuxième plaques (30, 40) latérales,
- le au moins un système (100) de circuit de refroidissement a plusieurs conduit (120) d'admission pour l'évacuation du liquide de refroidissement du tuyau (111) d'admission à respectivement l'une des plaques (16) de refroidissement et a plusieurs conduits (130) de retour pour l'évacuation du liquide de refroidissement des plaques (16) et refroidissement au tuyau (112) de retour, et
- les conduits (120) d'admission sont raccordés chacun au tuyau (111) d'admission au moyen d'une équerre (140) de vissage et les conduits (130) de retour sont raccordés chacun au tuyau (112) de retour au moyen d'une équerre (140) de vissage, les équerres (140) de vissage étant vissées respectivement dans un trou (180) du tuyau (111) d'admission et du tuyau (112) de retour.

2. Ensemble accumulateur d'énergie suivant la revendication 1, dans lequel
- les conduits (120) d'admission sont raccordés respectivement à l'une des plaques (16) de refroidissement au moyen d'une équerre (140) de vissage ou d'un coupleur (150) rapide ou d'un bec (160) de conduit souple, et
- les conduits (130) de retour sont raccordés à l'une des plaques (16) de refroidissement respectivement au moyen d'une équerre (140) de vissage ou d'un coupleur (150) rapide ou d'un bec (160) de conduit souple.

3. Ensemble accumulateur d'énergie suivant la revendication 1 ou 2, dans lequel
les conduits (120) d'admission et les conduits (130) de retour sont constitués chacun sous la forme d'un tuyau en acier fin ou sous la forme d'un tuyau en aluminium ou sous la forme d'un tube souple en matière plastique.

4. Ensemble accumulateur d'énergie suivant l'une des revendications 1 à 3, dans lequel
le tuyau (111) d'admission et le tuyau (112) de retour sont constitués chacun sous la forme d'un tuyau de section transversale carrée ou rectangulaire ou circulaire.

5. Ensemble accumulateur d'énergie suivant l'une des revendications 1 à 4, dans lequel
le tuyau (111) d'admission et le tuyau (112) de retour sont constitués chacun sous la forme d'un tuyau en aluminium ou d'un tuyau en matière plastique.

6. Ensemble accumulateur d'énergie suivant l'une des revendications 1 à 5, dans lequel
le tuyau (111) d'admission et le tuyau (112) de retour sont constitués chacun sous la forme d'un profilé tubulaire à une chambre ou d'un profilé tubulaire à plusieurs chambres.

7. Ensemble accumulateur d'énergie suivant l'une des revendications 1 à 6, dans lequel
la première et la deuxième plaques (30, 40) latérales sont disposées sur les côtés opposés de la pile (10) des plusieurs modules (11, 12, 13, 14) de batterie.

8. Ensemble accumulateur d'énergie suivant l'une des revendications 1 à 7, dans lequel
les plusieurs modules (11, 12, 13, 14) de batterie sont empilés en forme de pyramide entre la première et la deuxième plaque (30, 40) latérale.

9. Ensemble accumulateur d'énergie suivant l'une des revendications 1 à 8, comprenant en outre :
une plaque (20) de fond, sur laquelle est disposée la pile (10) des plusieurs modules (11, 12, 13, 14) de batterie, la plaque (20) de fond ayant une structure en treillis.

10. Ensemble accumulateur d'énergie suivant l'une des revendications 1 à 9, comprenant en outre :
une plaque (50) de fixation pour fixer l'ensemble accumulateur d'énergie à un objet au moyen d'un boulon (60) à cisaillement.

11. Ensemble accumulateur d'énergie suivant l'une des revendications 1 à 10, dans lequel
les modules (11, 12, 13, 14) de batterie sont imbriqués entre eux sous la forme d'une batterie de traction.

12. Conteneur (300) pour le logement de modules (11, 12, 13, 14) de batterie, comprenant :
- une plaque (20) de fond, sur laquelle une pile (10) d'une pluralité de modules (11, 12, 13, 14) de batterie peut être disposée ainsi qu'une première et une deuxième plaques (30, 40) latérales, disposées respectivement perpendiculairement à la plaque (20) de fond et latéralement à la pile (10), pour porter et fixer les modules (11, 12, 13, 14) de batterie, et
- au moins un système (100) de circuit de refroidissement pour le refroidissement des éléments (15) de batterie des modules (11, 12, 13, 14) de batterie au moyen d'un liquide de refroidissement, le au moins un système (100) de circuit de refroidissement étant disposé sur l'une des première et deuxième plaques (30, 40) latérales,
- dans lequel le au moins un système (100) de circuit de refroidissement comprend un répartiteur (110) de refroidissement pour la répartition du liquide de refroidissement sur les plusieurs modules (11, 12, 13, 14) de batterie et le répartiteur (110) de refroidissement comprend au moins un tuyau (111) d'admission et un tuyau (112) de retour, dans lequel le tuyau (111) d'admission et le tuyau (112) de retour sont disposés sur la une des première et deuxième plaques (30, 40) latérales,
- dans lequel le au moins un système (100) de circuit de refroidissement a plusieurs conduits (120) d'admission pour l'évacuation du liquide de refroidissement du tuyau (111) d'admission à respectivement l'une des plaques (16) de refroidissement et a plusieurs conduits (130) de retour pour l'évacuation du liquide de refroidissement des plaques (16) et refroidissement au tuyau (112) de retour, et
- dans lequel les conduits (120) d'admission sont raccordés chacun au tuyau (111) d'admission au moyen d'une équerre (140) de vissage et les conduits (130) de retour sont raccordés chacun au tuyau (112) de retour au moyen d'une équerre (140) de vissage, les équerres (140) de vissage étant vissées respectivement dans un trou (180) du tuyau (111) d'admission et du tuyau (112) de retour.

13. Véhicule comportant au moins un ensemble accumulateur d'énergie suivant l'une des revendications 1 à 11.

14. Véhicule suivant la revendication 13, conformé sous la forme d'un véhicule guidé sur rail.
